# EUROPEAN PATENT APPLICATION

(11) **EP 2 228 760 A1**
(43) Date of publication of application: **15.09.2010**
(21) Application number: 09155139.0
(22) Date of filing: 13.03.2009
(51) Int. Cl.: G06Q 10/00

(54) **Method, system and apparatus for updating a calendar database from an availability database and a reporting structure database**

(71) Applicant: RESEARCH IN MOTION LIMITED, Waterloo, Ontario N2L 3W8 (CA)
(72) Inventor: Godfrey, James, Waterloo Ontario N2L 5Z5 (CA); Martin, Daryl, Waterloo Ontario N2L 5Z5 (CA); Wilson, J F Sean, Waterloo Ontario N2L 5Z5 (CA)
(74) Representative: MERH-IP Matias Erny Reichl Hoffmann

(57) **Abstract**

A method apparatus and system for assembling meeting data to update a calendar database are provided, based on meeting request data including meeting invitees and a given time period, and further based on availability data from at least one availability database. Availability data associated with each meeting invitee is processed to determine availability of each meeting invitee during the given time period, and determine at least one unavailable invitee that is unavailable during the given time period. Reporting structure data is processed, from a reporting structure, to determine a respective alternate invitee for each at least one unavailable invitee. Availability data associated with each alternate invitee is processed to determine whether each alternate invitee is available during the given time period. If so, meeting data is assembled, for storage in the calendar database, the meeting data including respective identifiers of meeting invitees available during the given time period and of each alternate invitee, and meeting data is caused to be stored in the calendar database.

## Description

The specification relates generally to databases, and specifically to a method, system and apparatus for updating a calendar database from an availability database and a reporting structure database.

When a computing device is updating a calendar data base, when attempting to determine and store new meeting data, it can be difficult to find a common free time for all invitees to a meeting by processing a database of availability data, especially if the invitee list is large. Often system resources are wasted in processing large amounts of availability data, only to result in data which indicates that a common free time for all invitees does not occur for weeks or months from the current date. This can be problematic when the outcome of a meeting is needed to resolve critical projects issues with time constraints. While multiple meet requests can be generated, and meeting request data can be transmitted and replies received to resolve a meeting time, this is also generally wasteful of system resources, as well as bandwidth.

### GENERAL

A first aspect of the specification may provide a method of assembling meeting data to update a calendar database, based on meeting request data including meeting invitees and a given time period, and further based on availability data from at least one availability database. The method may be implementable at a first computing device. The method may comprise processing availability data associated with each meeting invitee to determine availability of each meeting invitee during the given time period, and determining at least one unavailable invitee that is unavailable during the given time period. The method may further comprises processing reporting structure data, from a reporting structure, to determine a respective alternate invitee for each at least one unavailable invitee. The method may further comprises processing availability data associated with each alternate invitee to determine whether each alternate invitee is available during the given time period; and, if so: assembling meeting data, for storage in the calendar database, the meeting data including respective identifiers of meeting invitees available during the given time period and of each alternate invitee; and causing the meeting data to be stored in the calendar database.

The at least one availability database can be stored at the first computing device, and the method can further comprise receiving the meeting request data at the first computing device from a second computing device in communication with the first computing device.

The meeting request data can comprise an indication that a respective alternate invitee is to be determined for each unavailable invitee.

The reporting structure can comprise at least one of organizational chart data, a company directory, a global address list (GAL), and hierarchical data.

The method can further comprise: determining that a number of meeting invitees who are available during the given time period is less than one of a threshold number and a threshold percentage of the meeting invitees; and if so, repeating processing availability data associated with each the meeting invitee to determine availability of each the meeting invitee during an alternate time period, and determining at least one unavailable invitee.

To determine the respective alternate invitee for each the at least one unavailable invitee, data associated with each the respective alternate invitee can be compared to at least one of subject data associated with the meeting, location data associated with the meeting, the reporting structure data, and title data.

Processing availability data associated with each the alternate invitee can further comprise: if a one of the alternate invitees, for a corresponding unavailable invitee, is unavailable during the given time period, then further processing the reporting structure data to determine, in place of the one of the alternate invitees, another alternate invitee for the corresponding unavailable invitee; and repeating the processing availability data associated with the another alternate invitee to determine whether the another alternate invitee is available during the given time period.

The meeting request data can comprise an indication that a one of the at least one unavailable invitee is essential, and the method cab further comprise, subsequent to determining at least one unavailable invitee and prior to the processing reporting structure data: processing the meeting request data to determine that the one of the at least one unavailable invitee is essential; determining an alternate time period when the one of the at least one unavailable invitee is available; and repeating processing availability data associated with each the meeting invitee and determining at least one unavailable invitee.

The at least one availability database can comprise the calendar database.

The at least one availability database can be stored in at least one of the first computing device and a second computing device, and the calendar database can be stored in at least one of the first computing device, the second computing device, and a third computing device.

Causing the meeting data to be stored in the calendar database can further comprises transmitting the meeting data to a second computing device whereon the calendar database is stored.

A second aspect of the specification may provide a computing device for assembling meeting data from at least one availability database to update a calendar database. The computing device may comprise a memory for storing the at least one availability database. The computing device may further provide a processing unit in communication with the memory. The processing unit may be enabled to process availability data associated with each meeting invitee to determine availability of each meeting invitee during the given time period, and determine at least one unavailable invitee that is unavailable during the given time period. The processing unit may be further enabled to process reporting structure data, from a reporting structure, to determine a respective alternate invitee for each the at least one unavailable invitee. The processing unit may be further enabled to process availability data associated with each alternate invitee to determine whether each alternate invitee is available during the given time period; and, if so: assemble meeting data, for storage in the calendar database, the meeting data including respective identifiers of meeting invitees available during the given time period and of each the alternate invitee; and cause the meeting data to be stored in the calendar database.

The at least one availability database can be stored at the computing device, and the processing unit can be further enabled to receive the meeting request data from a second computing device in communication with the computing device.

The meeting request data can comprise an indication that a respective alternate invitee is to be determined for each unavailable invitee.

The reporting structure can comprise at least one of organizational chart data, a company directory, a global address list (GAL), and hierarchical data.

The processing unit can be further enabled to: determine that a number of meeting invitees who are available during the given time period is less than one of a threshold number and a threshold percentage of the meeting invitees; and if so, again process the availability data associated with each the meeting invitee to determine availability of each the meeting invitee during an alternate time period, and again determine at least one unavailable invitee.

The processing unit can be further enabled to determine the respective alternate invitee for each at least one unavailable invitee by comparing data associated with each the respective alternate invitee to at least one of subject data associated with the meeting, location data associated with the meeting, the reporting structure data, and title data.

To process availability data associated with each the alternate invitee, the processing unit can be further enabled to: if a one of the alternate invitees, for a corresponding unavailable invitee, is unavailable during the given time period, then further process the reporting structure data to determine, in place of the one of the alternate invitees, another alternate invitee for the corresponding unavailable invitee; and again process the availability data associated with the another alternate invitee to determine whether the another alternate invitee is available during the given time period.

The meeting request data can comprises an indication that that a one of the at least one unavailable invitee is essential, and the processing unit can be further enabled to: between the determine at least one unavailable invitee step and the process reporting structure data step: process the meeting request data to determine that the one of the at least one unavailable invitee is essential; determine an alternate time period when the one of the at least one unavailable invitee is available; and again process availability data associated with each the meeting invitee and again determine at least one unavailable invitee.

The at least one availability database can comprise the calendar database.

The at least one availability database can be stored in at least one of the computing device and a second computing device, and the calendar database can be stored in at least one of the computing device, the second computing device, and a third computing device.

The processing unit can be further enabled to cause the meeting data to be stored in the calendar database by at least one of storing the meeting data in the calendar database and transmitting the meeting data to a second computing device whereon the calendar database is stored.

A third aspect of the specification may provide a system for updating a calendar database.

The system may comprise a first computing device for generating and transmitting meeting request data, the first computing device comprising a respective processing unit, a respective communication interface and a respective memory for storing a calendar database, all in communication. The system may further comprise a second computing device in communication with the first computing device via a communication network. The second computing device comprises a memory for storing the at least one availability database. The second computing device may further comprise a processing unit in communication with the memory. The processing unit may be enabled to process availability data associated with each meeting invitee to determine availability of each meeting invitee during the given time period, and determine at least one unavailable invitee that is unavailable during the given time period. The processing unit may be further enabled to process reporting structure data, from a reporting structure, to determine a respective alternate invitee for each the at least one unavailable invitee. The processing unit may be further enabled to process availability data associated with each the alternate invitee to determine whether each the alternate invitee is available during the given time period; and, if so: assemble meeting data, for storage in the calendar database, the meeting data including respective identifiers of meeting invitees available during the given time period and of each the alternate invitee; and transmit the meeting data to the first computing device via the communication network for storage in the calendar database such that a reminder for a meeting associated with the given time period can be generated.

A fourth aspect of the specification may provide a computing readable medium for storing computer readable instructions to control a computing device to: process availability data associated with each meeting invitee to determine availability of each the meeting invitee during the given time period, and determine at least one unavailable invitee that is unavailable during the given time period; process reporting structure data to determine a respective alternate invitee for each at least one unavailable invitee; process availability data associated with each the alternate invitee to determine whether each the alternate invitee is available during the given time period; and, if so: assemble meeting data, for storage in a calendar database, the meeting data including respective identifiers of meeting invitees available during the given time period and of each the alternate invitee; and cause the meeting data to be stored in the calendar database.

### BRIEF DESCRIPTIONS OF THE DRAWINGS

Embodiments are described with reference to the following figures, in which:

Figure 1 depicts a system for updating a calendar database stored a first computing device from at least one availability database stored at a second computing device, according to non-limiting embodiments;

Figure 2 depicts a representation of reporting structure data RD, according to non-limiting embodiments;

Figure 3 depicts a representation of availability data AD, according to non-limiting embodiments;

Figure 4 depicts a method for assembling meeting data from at least one availability database to update a calendar database at a first computing device, according to non-limiting embodiments;

Figure 5 depicts a representation of a view of a calendar application in which invitees for a meeting are selected, the representation including meeting request data; and

Figure 6 depicts the system of Figure 1 in which meeting data has been stored in the calendar database.

### DESCRIPTION OF PREFERRED EMBODIMENTS

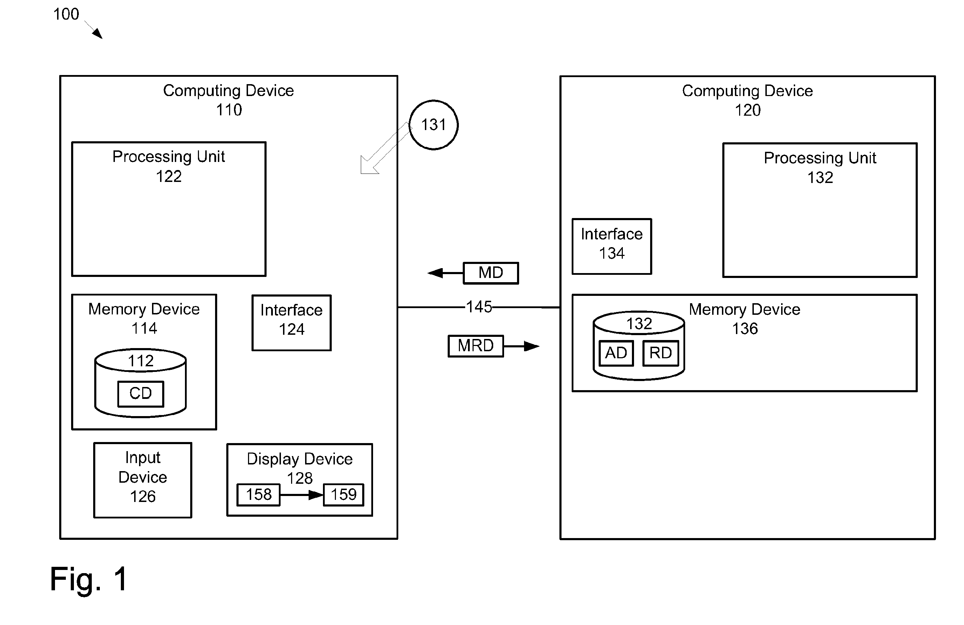

Figure 1 depicts a system 100 for updating a calendar database 112 stored a first computing device 110 from at least one availability database 132 stored at a second computing device 120, over a communication link 145. Calendar database 112 is for storing calendar data CD, at least one availability database 132 is for storing availability data AD and reporting structure data RD. It is understood, however that availability data AD and reporting structure data RD can be stored in separate databases and/or at separate computing device. It is further understood that in other embodiments, at least one availability database 132 can comprise calendar database 112, such that calendar data CD, availability data AD and reporting structure data RD are all stored in the same database (i.e. at least one availability database 132). It is hence in general understood that calendar data CD, availability data AD and reporting structure data RD may be stored in any suitable number of database, with each of the any number of suitable databases being stored at any suitable number of local and/or remote computing devices.

First computing device 110 comprises a processing unit 122, a communications interface 124 and memory device 114, all in communication, for example, via a computing bus. First computing device 110 further comprises an input device 126 and a display device 128.

Second computing device 120 comprises a processing unit 132, a communications interface 134 and memory device 136, all in communication, for example, via a computing bus.

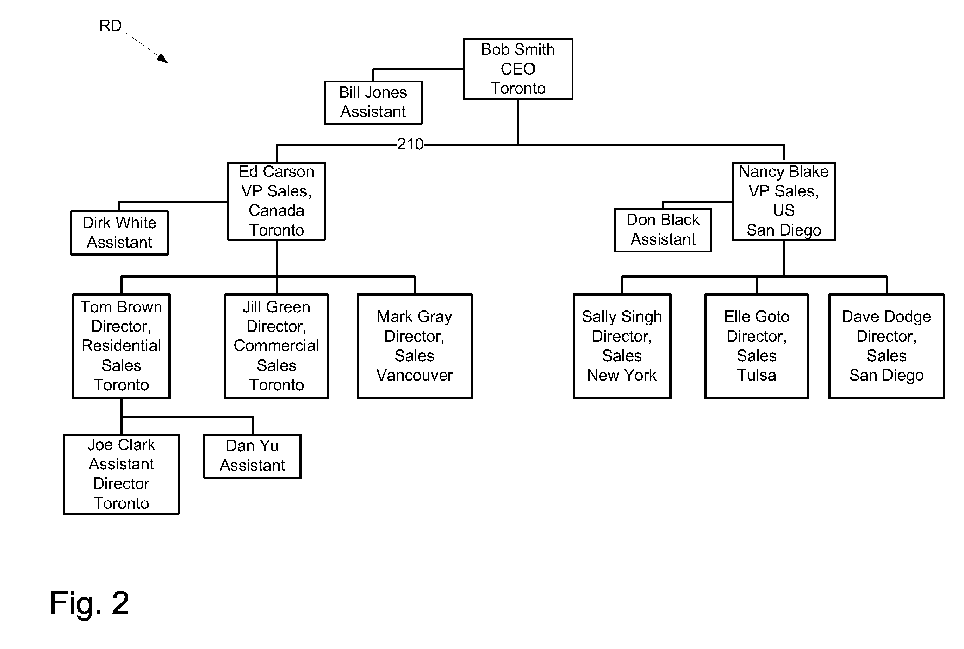

At least one availability database 132 generally comprises reporting structure data RD, such that relational hierarchies can be determined between potential invitees to meetings. For example, by processing reporting structure data RD, it can be determined whether a potential invitee is senior or subordinate to another potential invitee. Non-limiting examples of reporting structure data RD includes, but is not limited to, organizational chart data, a global address list (GAL), a company directory, and hierarchical data. A non-limiting example of a representation of reporting structure data RD is depicted in Figure 2, in which potential invitees to meetings are stored in association with a name (e.g. "Bob Smith"), a title (e.g. "CEO") and a location (e.g. "Toronto"), as well as their relation to one another in a hierarchy, which is represented in Figure 2 by lines (e.g. line 210). For example, "Ed Carson", who is "VP Sales, Canada" and located in "Toronto", is reports to "Bob Smith". It is understood, however, that the example depicted in Figure 2 is generally non-limiting, and that reporting structure data RD can include any suitable data associated with a potential invitee (e.g. employee number, telephone number, e-mail address, and the like), and any suitable number of potential invitees. Further, it is understood that reporting structure data RD can have any suitable format and/or structure suitable for storage in at least one availability database 132.

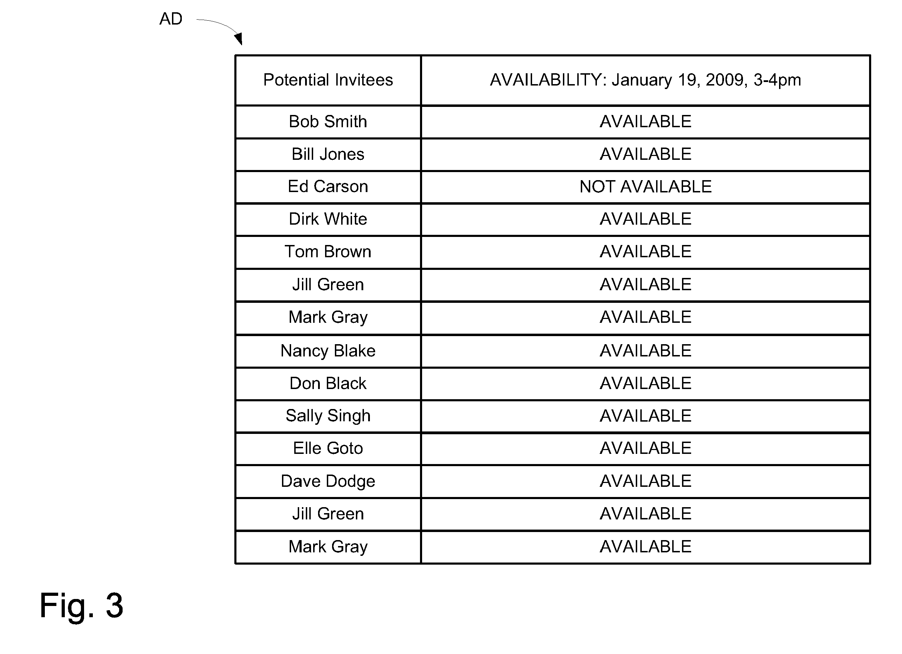

At least one availability database 132 further generally comprises availability data AD for a plurality of potential invitees for meetings, such that availability of the potential invitees during a given time period can be determined. A non-limiting example of a representation of availability data AD is depicted in Figure 3, in which availability of each potential invitee of Figure 2 is stored for a meeting on January 19, 2009 from 3-4pm. For example, "Bob Smith" is "Available", but "Ed Carson" is "NOT AVAILABLE". It is further understood, that the example depicted in Figure 3 is generally non-limiting, and that availability data AD can include any suitable data (e.g. employee number, telephone number, e-mail address, and the like) associated with a potential invitee, and any suitable number of potential invitees. Further, it is understood that availability data AD can have any suitable format and/or structure suitable for storage in at least one availability database 132.
In any event, first computing device 110 is generally enabled to send meeting request data MRD to second computing device 120 and subsequently receive meeting data MD from second computing device 120 via communication link 145, which can be stored in memory device 114 and processed by processing unit 122. In particular non-limiting embodiments, application 131 comprises a calendaring application, as described below.

First computing device 110 comprises any suitable computing device for generating and transmitting meeting request data MRD, receiving meeting data MD in response, and for processing application 131, including but not limited to any suitable combination of a desktop computer, a laptop, a PDA, a cell phones and the like. Other suitable types of computing devices are within the scope of present embodiments.

Communications interface 124 is enabled to transmit meeting request data MRD, and receive meeting data MD, under control of processing unit 122, via communication link 145. Accordingly, communications interface 124 is enabled to communicate via communication link 145 according to any suitable protocol which is compatible with communication link 145, including but not limited to packet based protocols, Internet protocols, analog protocols, cell phone protocols (1X, UTMS, CDMA, GMS, and the like), WiFi protocols, WiMax protocols and/or a combination. Other suitable protocols are within the scope of present embodiments.

Similarly, communication link 145 can comprise any suitable combination of wired or wireless networks, including but not limited to packet based networks, the Internet, analog networks, the PSTN, LAN, WAN, cell phone networks, WiFi networks, WiMax networks and/or a combination.

Display module 128 comprises circuitry 158 for generating a representation 159 of calendar application 131 and/or meeting request data MRD and/or availability data meeting data MD. Display module 128 can include any suitable combination of CRT and/or flat panel displays (e.g. LCD, plasma and the like), and circuitry 158 can include any suitable combination of circuitry for controlling the CRT and/or flat panel displays etc., including but not limited to display buffers, transistors, electron beam controllers, LCD cells, plasmas cells, phosphors etc. In particular, display module 128 and circuitry 158 can be controlled by processing unit 122 to generate representation 159.

Input device 126 is generally enabled to receive input data, and can comprise any desired combination of suitable input devices, including but not limited to a keyboard, a pointing device, a mouse, a track wheel, a touchpad, a touch screen and the like. In alternative embodiments input data can be received at first computing device 110 via communications interface 124 and/or communication link 145, for example from server 140.

Memory device 114 can be any suitable combination of volatile and non-volatile memory, RAM, ROM and the like.

Second computing device 120 comprises any suitable computing device for receiving meeting request data MRD, and generating and transmitting meeting data MD, including but not limited to any suitable combination of a server, a main frame , a desktop computer, and the like. Other suitable types of computing devices are within the scope of present embodiments. Processing unit 132 comprises any type of processing unit suitable for processing meeting request data MRD, and generating meeting data MD. Communication interface 134 can be similar to communication interface 124. Memory device 136 is suitable for storing at least one availability database 132, and can be similar to memory device 114. In particular non-limiting embodiments, second computing device 120 can comprise a Microsoft™ Exchange Server.

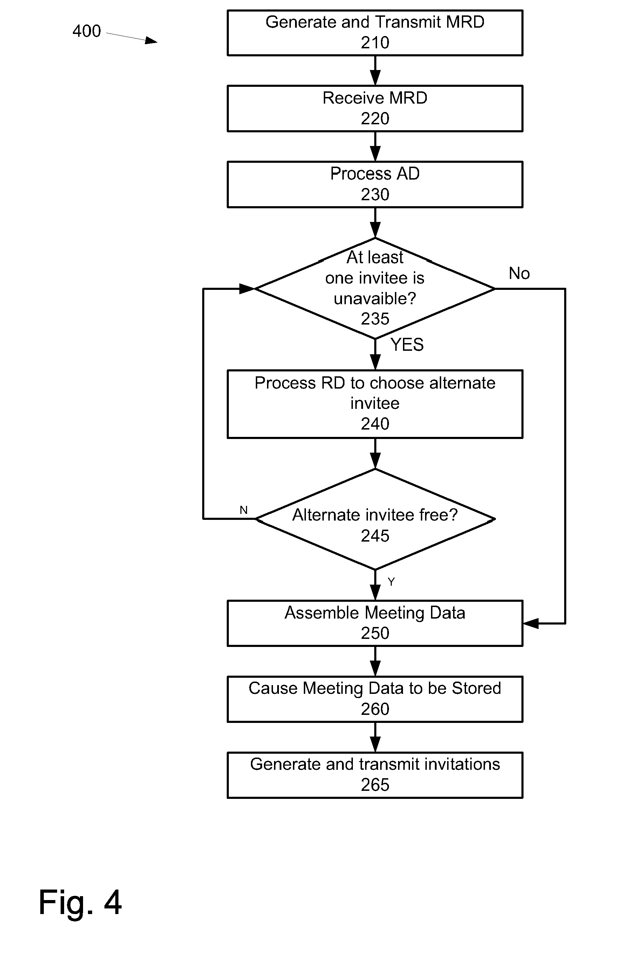

Attention is now directed to Figure 4 which depicts a method 400 for assembling meeting data from at least one availability database to update a calendar database at a first computing device. In order to assist in the explanation of the method 400, it will be assumed that the method 400 is performed using the system 100. Furthermore, the following discussion of the method 400 will lead to a further understanding of the system 100 and its various components. However, it is to be understood that the system 100 and/or the method 400 can be varied, and need not work exactly as discussed herein in conjunction with each other, and that such variations are within the scope of present embodiments.

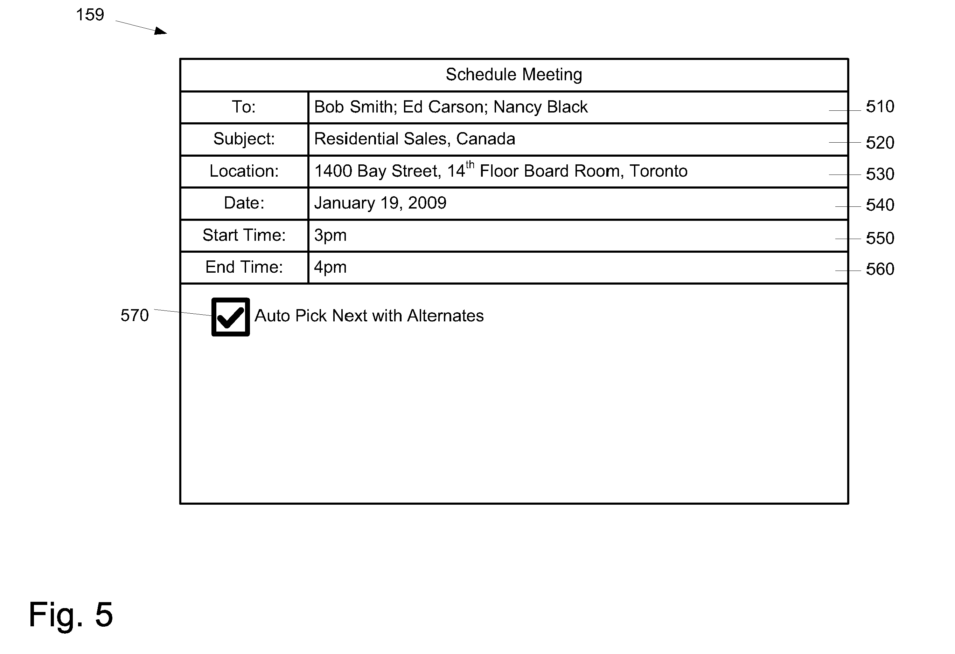

At step 210, meeting request data MRD is generated at first computing device 110 and transmitted to second computing device 120. For example, meeting request data MRD can be generated upon receiving input data from input device 126 when a meeting is being scheduled via an interaction with calendar application 131. For example, Figure 5 depicts non-limiting embodiments of representation 159 comprising a view of calendar application 131 in which invitees for a meeting are selected, representation 159 including meeting request data MRD. In this embodiment, invitees can be selected and/or entered via a "To" field 510, subject data for the meeting can be selected and/or entered via a "Subject" field 520, location data for the meeting can be selected and/or entered via a "Location" field 530, a date, start and end times for the meeting can be selected and/or entered via respective "Date", "Start Time" and "End Time" fields 540, 550, 560. Furthermore, in these embodiments, representation 159 comprises a checkbox 570 which, when activated (as depicted), indicates that an "Autopick Next with Alternates" option has been selected. It is understood that meeting request data is generated by processing the data in fields 510-570.

However, in further embodiments, meeting request data MRD can be generated without input from input device 126, for example, for scheduling a periodic meeting. It is understood that in these embodiments, meeting request data MRD can automatically include selection of the "Autopick Next with Alternates" option and is generated and transmitted to verify and finalize invitees to the periodic meeting.

It is understood that meeting request data MRD can have any suitable format, and need not be limited to fields, rows and columns as depicted in representation 159 of Figure 5.

In any event, meeting request data MRD comprises an indication that alternate invitees are to be determined if a meeting invitee is not available during said given time period, for example via the "Autopick Next with Alternates" option.

At step 220, meeting request data MRD is received at second computing device 120. Upon receipt of meeting request data MRD, second computing device 120 processes availability data AD at step 230 from at least one availability database 132 to determine availability of meeting invitees during a given time period, as indicated in meeting request data MRD. For example, processing unit 132 processes at least a portion of availability data AD to determine the availability of invitees as indicated in meeting request data MRD. Using the non-limiting example provided in Figure 5, a given time period can be January 19, 2009, from 3-4pm. Further, availability of invitees from meeting request data MRD can be determined by comparing an identifier of invitees ("Bob Smith", "Ed Carson" and "Nancy Black" from Figure 5) to availability data AD, such as availability data AD depicted in Figure 3.

At step 235 it is determined if at least one invitee is an unavailable attendee that is unavailable during the given time period. Again returning to the exampled depicted in Figures 3 and 5, it is determined that Bob Smith and Nancy Black are available during the given time period, but Ed Carson is not. If at least one invitee is an unavailable attendee, at step 240 reporting structure data RD from at least one availability database 132 is processed to determine an alternate invitee for at least unavailable invitee who is unavailable during the given time period. For example, to determine an alternate invitee for at least one unavailable invitee, data associated with the alternate invitee can be compared to at least one of data associated with at least one of subject data and location data associated with a meeting (as determined from meeting request data MRD), seniority data, and title data. Using the non-limiting example of reporting structure data RD of Figure 2, it is understood that potential alternate invitees can include "Nancy Blake", "Tom Brown", "Jill Green", "Mark Gray", "Dirk White" and "Bill Jones", as each of these potential invitees report to either "Bob Smith" or "Ed Carson". However any suitable method can be used to choose the alternate invitee, based on predetermined rules which can also be stored in memory device 136.

Non-limiting embodiments of pre-determined rules are as follows:

1. Alternate invitee chosen based on seniority data and/or title data. In these embodiments, potential invitees greater than or equal to a given seniority level can be chosen as an alternate invitee, relative to the seniority level of the at least one invitee. For example, as "Ed Carson" is a vice-president ("VP"), a seniority based rule can comprise that only potential invitees with the same seniority level and higher can be chosen as an alternate invitee. In these embodiments, only Nancy Blake could be chosen as an alternate invitee for Ed Carson. However, in other embodiments, a seniority based rule can comprise that only potential invitees with a seniority level that is one below the seniority level of the at least one invitee can be chosen as an alternate (e.g. direct reports having a suitable title). In these embodiments, "Nancy Blake", "Tom Brown", "Jill Green", and "Mark Gray" can be chosen as alternate invitees to Ed Carson, but "Dirk White" and "Bill Jones" can not be chosen as alternate invitees to Ed Carson as they are assistants (i.e. they're seniority level is not high enough). In some of these embodiments, seniority can be represented using any suitable alphanumeric scheme such that numerical comparisons can be made between the seniority level of the at least one invitee and the seniority level of potential invitees (e.g. CEO=1, VP=2, Director=3, Assistant Director=4, etc.).

2. Alternate invitee chosen based on subject data associated with a meeting. In these embodiments, subject data associated with a meeting can be compared to data associated with potential invitees in reporting structure data RD to determine an alternate invitee. For example, from Figure 5, subject data associated with the meeting is "Residential Sales, Canada", as determined from field 520 as meeting request data MRD can also comprise the data from field 520. Again using the reporting structure data RD depicted in Figure 2, subject data "Residential Sales, Canada" is compared with data associated with potential invitees. In these embodiments, "Tom Brown, Director, Residential Sales, Toronto" and "Mark Gray, Director, Sales, Vancouver" can be chosen as potential alternate invitees to the meeting as, in some embodiments, there is a partial match between a subset of the subject data "Canada" and the title of the at least one invitee "VP, Sales, Canada", and hence only subordinates to "Ed Carson" can be alternate invitees, as "Nancy Blake" is "VP Sales, US". Furthermore, there is at least a partial match between a subset of the subject data, "Residential Sales", and the data, "Residential Sales" associated with "Tom Brown". Similarly, there is at least a partial match between a subset of the subject data, "Canada", and the data, "Vancouver" associated with "Tom Brown", as "Vancouver" is geographically located in "Canada". In some embodiments, such associations can be stored as mathematical relationships in at least one availability database 132, such that such determinations can be performed (e.g. Canada subsumes Toronto and Vancouver, while there is no intersection between US and Canada). Such mathematical relationships can be in any suitable format.

In any event, in these embodiments, "Tom Brown" and "Mark Gray" can be chosen as potential alternates. In some embodiments, any suitable weighting system can be used to rank the matches, and the alternate invitee determined based on rankings: e.g. "Residential Sales" can be determined to be a better match than "Sales" as more terms in the subject data match.

3. Alternate invitee chosen based on location data associated with a meeting. In these embodiments, location data associated with a meeting can be compared to location data associated with potential invitees in reporting structure data RD to determine an alternate invitee. For example, from Figure 5, location data associated with the meeting is "1400 Bay Street, 14th Floor Board Room, and Toronto". Hence, potential invitees who are located in Toronto, as determined from reporting structure data RD, can be chosen as potential invitees. Hence, from Figure 2, "Tom Brown", "Jill Green" and "Joe Clark" can be chosen as an alternate invitee as each is located in Toronto. Other potential invitees are excluded from being alternate invitees as they are not located in Toronto and/or there is no location data associated with them (e.g. "Bill Jones", "Dirk White", "Dan Yu" and "Don Black").

4. Alternate invitee chosen based on a completion date, such that alternate invitees are chosen based on availability prior to a desired completion date.

5. Alternate invitee chosen based on an invitee optimization rule, such that redundant invitees at the same organizational level are removed from a list of invitees provided someone from the same organizational level is available. Alternatively, if everyone at that organizational level is busy, a common manager can be sent instead (a common manager one organization level up).

6. Alternate invitee chosen based on a pre-configured list of possible alternatives in a central location that can be accessed by an organizer of the meeting (e.g. manually) and/or by a computing device (e.g. automatically). Recommendations can than be provided that may be missed by any of the rules described above.

Any other suitable pre-determined rules are within the scope of the present specification.

In some embodiments, a combination of pre-determined rules can be used to determine an alternate invitee. For example, an alternate invitee can be chosen based on and suitable combination seniority/title data, subject data associated with a meeting and location data: in the example from Figures 2 and 5, an alternate invitee can be chosen based on their seniority being at least location in Toronto, as well as their seniority being at least one below VP, and the subject data of the meeting. Furthermore, potential alternate invitees can be ranked in any suitable manner, based on a combination of pre-determined rules. In these embodiments, "Tom Brown" can be chosen as an alternate invitee as "Tom Brown" is located in "Toronto", is a "Director" (one below VP) and in "Residential Sales".

Returning again to Figure 4, once an alternate invitee is chosen, at step 245, availability data AD associated with the alternate invitee is processed to determine if the alternate invitee is free during the given time period. Such a determination can be made similar as described above with reference to step 235. Step 235 is repeated to determine another alternate invitee for at least one invitee if availability data AD associated with the alternate invitee is indicative that the alternate invitee is not available during the given time period. The steps 235 to 245 can be repeated as desired until a suitable alternate attendee is found.

However, if it is determined that alternate invitee is free during the given time period, at step 250, meeting data MD for storage in calendar database 112 is assembled, meeting data MD including identifiers of meeting invitees available during the given time period, including the alternate invitee. The identifier of the alternate invitee can be flagged to indicate that the alternate invitee is an alternate to the at least one invitee. In embodiments where at step 235 it is determined that all invitees are free during the given time period, meeting data MD is assembled at step 250 though without an alternate invitee as no alternate invitee will have been chosen (i.e. steps 240 and 245 are not performed).

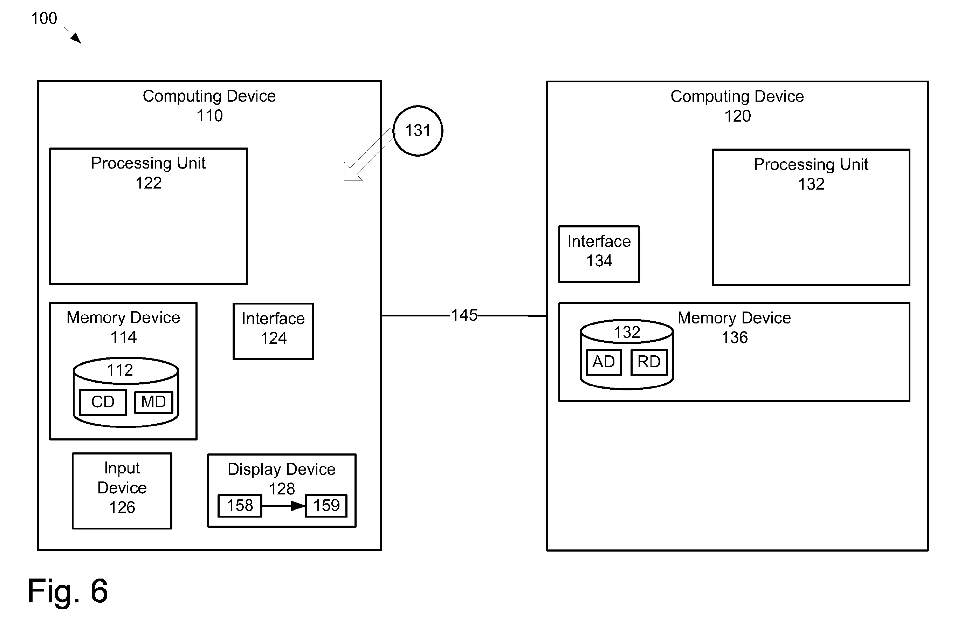

At step 260, meeting data MD is caused to be stored in calendar database 112, for example by transmitting meeting data MD to first computing device 110 for storage in calendar database 112, as depicted in Figure 6. At step 265 invitations to the meeting can then be sent from first computing device 110 to computing devices associated with invitees to the meeting, including the alternate invitee. It is understood that the invitations can be accepted or rejected, and data representative of accepting or rejecting the invitation can then be transmitted back to the first computing device 110, to schedule the meeting and store further meeting data in calendar database 112.

It is understood that alternates invitees can be chosen for at least one invitee to the meeting, or all invitees to the meeting. In some alternative embodiments, step 230, can further comprise determining that a number of meeting invitees who are available during a given time period is less than one of a threshold number and a threshold percentage of the meeting invitees; and if so processing availability data associated with each meeting invitee is repeated to determine availability of each meeting invitee during an alternate time period; determining at least one unavailable invitee is also repeated as the unavailable attendees in the alternate time period can be different from those in the first given time period. For example, it may be desired that at least the threshold number and/or threshold percentage of invitees attend the meeting. A threshold number/threshold percentage can be indicated in meeting request data MRD (e.g. received via input device 126, or as a default value stored in either calendar database 112, at least one availability database 132, or in data associated with calendar application 131).

In some embodiments, it can be determined if the at least one invitee who is not available during the given timer period is a essential invitee, and who's presence is required at the meeting. Such a determination can be made before after or during any suitable step in method 400 (e.g. before, after or during any of steps 220-245, or any other suitable step). In any event, if so an alternate time period can be determined for the meeting, when at least the essential invitee is available. In these embodiments, at step 250 the assembled meeting data MD can be indicative of the alternate time period.

It is understood that in some embodiments, at least one availability database 132 can be stored in first computing device 110, and that method 400 can be performed using resources at first computing device 110; it is further understood that generation of meeting data request MRD and meeting data MD are internal to first computing device 110.

It is further understood that in some embodiments, calendar database 112 and/or availability database 132 can be stored on a third computing device and accessed via a communication network.

In any event, present embodiments enable efficient use of system resources, for example at first and second computing device 110, 120 and a reduction in bandwidth when attempting to determine and store new meeting data in a calendar database. Indeed, but processing availability data to determine which invitees are free or unavailable during a given time period, and automatically determining potential alternate invitees who are free during the given time period, fewer system resources are used at both first and second computing device 110, 120. Furthermore, the amount of bandwidth used in determining the new meeting data is reduced as the amount of data transmitted over a computer network (e.g. link 145) is reduced.

Those skilled in the art will appreciate that in some embodiments, the functionality of first and second computing devices 110, 120 can be implemented using preprogrammed hardware or firmware elements (e.g., application specific integrated circuits (ASICs), electrically erasable programmable read-only memories (EEPROMs), etc.), or other related components. In other embodiments, the functionality of first and second computing devices 110, 120 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of assembling meeting data to update a calendar database (112), based on meeting request data (MRD) including data identifying meeting invitees and a given time period, and further based on availability data (AD) from at least one availability database, said method implemented at a first computing device (120), said method comprising:
processing availability data (AD) associated with each said meeting invitee to determine availability of each said meeting invitee during said given time period, and determining at least one unavailable invitee that is unavailable during said given time period;
processing reporting structure data (RD), from a reporting structure, to determine a respective alternate invitee for each said at least one unavailable invitee;
processing availability data (AD) associated with each said alternate invitee to determine whether each said alternate invitee is available during said given time period; and, if so:
assembling meeting data, for storage in said calendar database (112), said meeting data including respective identifiers of meeting invitees available during said given time period and of each said alternate invitee; and
causing said meeting data to be stored in said calendar database (112).

2. The method of claim 1, wherein said at least one availability database is stored at said first computing device (120), and the method further comprises receiving said meeting request data (MRD) at said first computing device (120) from a second computing device (110) in communication with said first computing device (120).

3. The method of claim 1 or 2, wherein said meeting request data (MRD) comprises an indication that a respective alternate invitee is to be determined for each unavailable invitee.

4. The method of claim 1, 2 or 3, wherein said reporting structure comprises at least one of organizational chart data, a company directory, a global address list (GAL), and hierarchical data.

5. The method of any preceding claim, further comprising:
determining that a number of meeting invitees who are available during said given time period is less than one of a threshold number and a threshold percentage of said meeting invitees; and if so,
repeating said processing availability data (AD) associated with each said meeting invitee to determine availability of each said meeting invitee during an alternate time period, and said determining at least one unavailable invitee.

6. The method of any preceding claim, wherein to determine said respective alternate invitee for each said at least one unavailable invitee, data associated with each said respective alternate invitee is compared to at least one of subject data associated with said meeting, location data associated with said meeting, said reporting structure data (RD), and title data.

7. The method of any preceding claim, wherein said processing availability data (AD) associated with each said alternate invitee further comprises:
if a one of said alternate invitees, for a corresponding unavailable invitee, is unavailable during said given time period, then
further processing said reporting structure data (RD) to determine, in place of said one of said alternate invitees, another alternate invitee for said corresponding unavailable invitee; and
repeating said processing availability data (AD) associated with said another alternate invitee to determine whether said another alternate invitee is available during said given time period.

8. The method of any preceding claim, wherein said meeting request data (MRD) comprises an indication that a one of said at least one unavailable invitee is essential, and the method further comprises, subsequent to said determining at least one unavailable invitee and prior to said processing reporting structure data (RD):
processing said meeting request data (MRD) to determine that said one of said at least one unavailable invitee is essential;
determining an alternate time period when said one of said at least one unavailable invitee is available; and
repeating said processing availability data (AD) associated with each said meeting invitee and said determining at least one unavailable invitee.

9. The method of any preceding claim, wherein said at least one availability database comprises said calendar database (112).

10. The method of any preceding claim, wherein said at least one availability database is stored in at least one of said first computing device (120) and a second computing device (110), and said calendar database (112) is stored in at least one of said first computing device (120), said second computing device (110), and a third computing device.

11. The method of any preceding claim, wherein said causing said meeting data to be stored in said calendar database (112) further comprises transmitting said meeting data to a second computing device (110) whereon said calendar database (112) is stored.

12. A computing device for assembling meeting data from at least one availability database to update a calendar database (112), said computing device comprising:
a memory for storing said at least one availability database; and
a processing unit in communication with said memory, said processing unit enabled to implement the steps of the method of any of claims 1 to 11.

13. A system for updating a calendar database (112), said system comprising:
a first computing device (110) for generating and transmitting meeting request data (MRD), said first computing device (110) comprising a respective processing unit (122), a respective communication interface (124) and a respective memory (114) for storing a calendar database (112), all in communication;
a second computing device (120) in communication with said first computing device (110) via a communication network, said second computing device (120) comprising:
a memory (136) for storing said at least one availability database; and
a processing unit (132) in communication with said memory, said processing unit enabled to:
process availability data (AD) associated with each said meeting invitee to determine availability of each said meeting invitee during said given time period, and determine at least one unavailable invitee that is unavailable during said given time period;
process reporting structure data (RD), from a reporting structure, to determine a respective alternate invitee for each said at least one unavailable invitee;
process availability data (AD) associated with each said alternate invitee to determine whether each said alternate invitee is available during said given time period; and, if so:
assemble meeting data, for storage in said calendar database (112), said meeting data including respective identifiers of meeting invitees available during said given time period and of each said alternate invitee; and
transmit said meeting data to said first computing device (110) via said communication network for storage in said calendar database (112) such that a reminder for a meeting associated with said given time period can be generated.

14. A computer readable storage medium storing programming instructions executable on a processor of a computing device (120); said programming instructions causing said computing device to implement the steps of the method of any of claims 1 to 11.

## Amended claims

### Amended claims in accordance with Rule 137(2) EPC.

**1.** A method of assembling meeting data to update a calendar database (112), based on meeting request data (MRD) including data identifying meeting invitees and a given time period, and further based on availability data (AD) from at least one availability database, said method implemented at a first computing device (120) comprising a processing unit (132), said method comprising:
processing availability data (AD) associated with each said meeting invitee to determine availability of each said meeting invitee during said given time period, and determining at least one unavailable invitee that is unavailable during said given time period by comparing respective identifiers of invitees to said availability data at said processing unit (132);
processing reporting structure data (RD), from a reporting structure comprising data associated with potential invitees, to determine a respective alternate invitee for each said at least one unavailable invitee by comparing data associated with said alternate invitee with at least one of data associated with a meeting, seniority data and title data, said seniority data and said title data stored in said reporting structure data;
processing availability data (AD) associated with each said alternate invitee to determine whether each said alternate invitee is available during said given time period by comparing an identifier of each said alternate invitee to said availability data (AD) associated with said alternate invitee at said processing unit (132); and, if so:
assembling meeting data, for storage in said calendar database (112), said meeting data including respective identifiers of meeting invitees available during said given time period and of each said alternate invitee; and
causing said meeting data to be stored in said calendar database (112).

**2.** The method of claim 1, wherein said at least one availability database is stored at said first computing device (120), and the method further comprises receiving said meeting request data (MRD) at said first computing device (120) from a second computing device (110) in communication with said first computing device (120).

**3.** The method of claim 1 or 2, wherein said meeting request data (MRD) comprises an indication that a respective alternate invitee is to be determined for each unavailable invitee.

**4.** The method of claim 1, 2 or 3, wherein said reporting structure comprises at least one of organizational chart data, a company directory, a global address list (GAL), and hierarchical data.

**5.** The method of any preceding claim, further comprising:
determining that a number of meeting invitees who are available during said given time period is less than one of a threshold number and a threshold percentage of said meeting invitees; and if so,
repeating said processing availability data (AD) associated with each said meeting invitee to determine availability of each said meeting invitee during an alternate time period, and said determining at least one unavailable invitee.

**6.** The method of any preceding claim, wherein to determine said respective alternate invitee for each said at least one unavailable invitee, data associated with each said respective alternate invitee is compared to at least one of subject data associated with said meeting, location data associated with said meeting, said reporting structure data (RD), and title data.

**7.** The method of any preceding claim, wherein said processing availability data (AD) associated with each said alternate invitee further comprises:
if a one of said alternate invitees, for a corresponding unavailable invitee, is unavailable during said given time period, then
further processing said reporting structure data (RD) to determine, in place of said one of said alternate invitees, another alternate invitee for said corresponding unavailable invitee; and
repeating said processing availability data (AD) associated with said another alternate invitee to determine whether said another alternate invitee is available during said given time period.

**8.** The method of any preceding claim, wherein said meeting request data (MRD) comprises an indication that a one of said at least one unavailable invitee is essential, and the method further comprises, subsequent to said determining at least one unavailable invitee and prior to said processing reporting structure data (RD):
processing said meeting request data (MRD) to determine that said one of said at least one unavailable invitee is essential;
determining an alternate time period when said one of said at least one unavailable invitee is available; and
repeating said processing availability data (AD) associated with each said meeting invitee and said determining at least one unavailable invitee.

**9.** The method of any preceding claim, wherein said at least one availability database comprises said calendar database (112).

**10.** The method of any preceding claim, wherein said at least one availability database is stored in at least one of said first computing device (120) and a second computing device (110), and said calendar database (112) is stored in at least one of said first computing device (120), said second computing device (110), and a third computing device.

**11.** The method of any preceding claim, wherein said causing said meeting data to be stored in said calendar database (112) further comprises transmitting said meeting data to a second computing device (110) whereon said calendar database (112) is stored.

**12.** A computing device for assembling meeting data from at least one availability database to update a calendar database (112), said computing device comprising:
a memory for storing said at least one availability database; and
a processing unit in communication with said memory, said processing unit enabled to implement the steps of the method of any of claims 1 to 11.

**13.** A system for updating a calendar database (112), said system comprising:
a first computing device (110) for generating and transmitting meeting request data (MRD), said first computing device (110) comprising a respective processing unit (122), a respective communication interface (124) and a respective memory (114) for storing a calendar database (112), all in communication;
a second computing device (120) in communication with said first computing device (110) via a communication network, said second computing device (120) comprising:
a memory (136) for storing said at least one availability database; and
a processing unit (132) in communication with said memory, said processing unit enabled to:
process availability data (AD) associated with each said meeting invitee to determine availability of each said meeting invitee during said given time period, and determine at least one unavailable invitee that is unavailable during said given time period by comparing respective identifiers of said invitees to said availability data;
process reporting structure data (RD), from a reporting structure comprising data associated with potential invitees, to determine a respective alternate invitee for each said at least one unavailable invitee by comparing data associated with said alternate invitee with at least one of data associated with at a meeting, seniority data and title data, said seniority data and said title data stored in said reporting structure data;
process availability data (AD) associated with each said alternate invitee to determine whether each said alternate invitee is available during said given time period by comparing an identifier of each said alternate invitee to said availability data (AD) associated with said alternate invitee at said processing unit (132); and, if so:
assemble meeting data, for storage in said calendar database (112), said meeting data including respective identifiers of meeting invitees available during said given time period and of each said alternate invitee; and
transmit said meeting data to said first computing device (110) via said communication network for storage in said calendar database (112) such that a reminder for a meeting associated with said given time period can be generated.

**14.** A computer readable storage medium storing programming instructions executable on a processor of a computing device (120); said programming instructions causing said computing device to implement the steps of the method of any of claims 1 to 11.
